# EUROPÄISCHE PATENTANMELDUNG

(11) **EP 4 484 020 A1**
(43) Veröffentlichungstag der Anmeldung: **01.01.2025**
(21) Anmeldenummer: 23181993.9
(22) Anmeldetag: 28.06.2023
(51) Int. Cl.: B05C 11/10, B05C 17/01

(54) **VERFAHREN ZUM BETREIBEN EINES AUSPRESSGERÄTS UND AUSPRESSGERÄT**

(71) Anmelder: Hilti Aktiengesellschaft, 9494 Schaan (LI)
(72) Erfinder: Schmidt, Peer, 88131 Lindau (DE); Hunger, Markus, 86899 Landsberg am Lech (DE); Binder, Albert, 9470 Buchs (CH)
(74) Vertreter: Hilti Aktiengesellschaft Corporate Intellectual Property

(57) **Zusammenfassung**

Die Erfindung betrifft ein Verfahren zum Betreiben eines Auspressgeräts (10) aufweisend die folgenden Schritte:
- Ermittlung einer Tiefe (77) der Bohrung (75) mittels der Distanzmesseinrichtung (60);
- Ermittlung oder Einstellung eines Durchmessers der Bohrung (75);
- Berechnung eines Innenvolumens (79) der Bohrung (75) (S3);
- Ermittlung oder Einstellung eines Volumens eines innerhalb der Bohrung (75) anzuordnenden Teils eines Elements, insbesondere einer Ankerstange;
- Subtraktion des Volumens von dem berechneten Innenvolumen (79) der Bohrung (75) zu einem Füllvolumen;
- Einstellung des ermittelten Füllvolumens in dem Auspressgeräts (10) zur Ausgabe eines folgenden Auspressvorgangs.

## Beschreibung

### Technisches Gebiet

Die Erfindung betrifft ein Verfahren zum Betreiben eines Auspressgeräts. Darüber hinaus betrifft die Erfindung ein Auspressgerät zur Durchführung eines derartigen Verfahrens.

### Technischer Hintergrund

Neben mechanisch betreibbaren Auspressgeräten ist aus der Praxis eine Vielzahl von elektrisch betreibbaren Auspressgeräten bekannt. In die Auspressgeräte sind Kartuschen einlegbar, wobei in den Kartuschen befindliche Massen über einen in Wirkverbindung mit der Kartusche bringbaren Mischer ausbringbar sind. Bei den Massen kann es sich um ein Zwei-Komponenten-System, beispielsweise einen Mörtel, handeln.

Mechanisch betreibbare Auspressgeräte weisen einen Hebel auf, bei dessen Betätigung eine Schubstange des Auspressgerätes um einen definierten Weg in Richtung der Kartusche bewegt wird und eine bestimmte Menge der in der Kartusche befindlichen Masse bzw. Massen durch den Mischer ausgepresst wird.

Weiterhin sind elektrisch betreibbare Auspressgeräte bzw. Dispenser bekannt, bei denen beispielsweise über eine Benutzerschnittstelle einstellbar ist, wieweit eine Schubstange des Auspressgeräts bei einer Betätigung eines Schalters bewegt werden soll bzw. wieviel Masse bei einer Betätigung des Schalters von dem Auspressgerät ausgegeben werden soll.

Wenn die in der Kartusche befindliche Masse zur Befestigung beispielsweise einer Ankerstange in einer in einer Wandung befindlichen Bohrung verwendet werden soll, muss ein Benutzer bzw. Bediener sowohl bei mechanisch betätigbaren Auspressgeräten als auch bei elektrisch betätigbaren Auspressgeräten selbst abschätzen, wieviel Masse hierzu in die Bohrung einzubringen ist.

Diese Abschätzung ist fehleranfällig, so dass eine gewünschte Füllung des Bohrloches bzw. der Bohrung mit der Masse schwer zu erzielen ist. Wird zu wenig Masse eingefüllt, besteht die Gefahr, dass mit der in der Bohrung angeordneten Ankerstange keine gewünscht großen Kräfte übertragen werden können. Wird dagegen zu viel Masse eingefüllt, ist der Materialverbrauch unerwünscht hoch und die Masse kann bei der Einführung des Elements aus der Bohrung herausquellen.

Es ist Aufgabe der vorliegenden Erfindung, ein Verfahren zum Betreiben eines Auspressgeräts zur Verfügung zu stellen, mittels dem für den jeweiligen Anwendungsfall eine benötigte Masse sicher ermittelbar ist. Darüber hinaus ist es Aufgabe der vorliegenden Erfindung ein Auspressgerät zur Durchführung eines derartigen Verfahrens zur Verfügung zu stellen.

### Offenbarung der Erfindung

Diese Aufgabe wird durch das Verfahren zum Betreiben eines Auspressgeräts gemäß Anspruch 1 gelöst. Darüber hinaus wird die Aufgabe durch ein Auspressgerät gemäß Anspruch 11 gelöst.

Weitere Ausgestaltungen sind in den abhängigen Ansprüchen angegeben.

Gemäß einem Aspekt der Erfindung ist ein Verfahren zum Betreiben eines Auspressgeräts, welches in Wirkverbindung mit einer mit einem Mischer ausgeführten Kartusche bringbar ist, wobei das Auspressgerät eine Steuerungseinrichtung und eine Distanzmesseinrichtung aufweist, wobei mittels des Auspressgeräts in der Kartusche befindliche Masse in eine in einer Wandung befindliche Bohrung einbringbar ist, vorgesehen. Das Verfahren weist die folgenden Schritte auf:
- Ermittlung einer Tiefe der Bohrung mittels der Distanzmesseinrichtung;
- Ermittlung oder Einstellung eines Durchmessers der Bohrung;
- Berechnung eines Innenvolumens der Bohrung;
- Ermittlung oder Einstellung eines Volumens eines innerhalb der Bohrung anzuordnenden Teils eines Elements, insbesondere einer Ankerstange;
- Subtraktion des Volumens von dem berechneten Innenvolumen der Bohrung zu einem Füllvolumen;
- Einstellung des ermittelten Füllvolumens in dem Auspressgeräts zur Ausgabe eines folgenden Auspressvorgangs.

Mit dem erfindungsgemäßen Verfahren ist ein für den jeweiligen Anwendungsfall erforderliches Füllvolumen sehr genau ermittelbar und es ist sicher verhindert, dass weniger Masse oder mehr Masse als gewünscht in die Bohrung eingefüllt wird. Somit ist einerseits ein sicherer Halt des Elements in der Bohrung gewährleistet. Andererseits ist ein erforderlicher Materialeinsatz optimiert und es ist sicher verhindert, dass nach der Anordnung des Elements in der Bohrung Masse bzw. Material aus der Bohrung heraustritt.

Bei dem Auspressgerät kann es sich grundsätzliche um jede Bauart von Auspressgerät bzw. Dispenser handeln, wobei das Auspressgerät mechanisch, elektrisch, hydraulisch, pneumatisch oder dergleichen betreibbar sein kann.

Bei einer vorteilhaften Ausführungsform eines Verfahrens nach der Erfindung ist es vorgesehen, dass eine Geschwindigkeit, mit der das Auspressgerät während eines Befüllvorgangs gegenüber der Oberfläche der Wandung bewegt wird, ermittelt wird, wobei ein Befüllvorgang der Bohrung in Abhängigkeit der ermittelten Geschwindigkeit durchgeführt wird. Hierbei wird insbesondere ein von dem Auspressgerät ausgegebener Massefluss gesteuert oder geregelt. Dies hat den Vorteil, dass beispielsweise einfach verhindert werden kann, dass eine Mischerspitze während eines Befüllvorgangs in Kontakt mit der Masse kommt und hierdurch verschmutzt wird. Darüber hinaus kann durch die Anpassung der Ausgabemenge an die Geschwindigkeit sichergestellt werden, dass insbesondere der innere Bereich der Bohrung vollständig gefüllt wird. Die Geschwindigkeit, mit der das Auspressgerät während eines Befüllvorgangs gegenüber der Oberfläche der Wandung bewegt wird, wird insbesondere durch eine fortlaufende Abstandsmessung zwischen dem Auspressgerät und der Oberfläche der Wandung ermittelt.

Bei einer vorteilhaften Ausführungsform eines Verfahrens nach der Erfindung wird ein von dem Auspressgerät ausgegebener Massefluss, also ein ausgegebenes Massevolumens pro Zeit, reduziert oder gestoppt, wenn eine ermittelte Geschwindigkeit kleiner oder gleich einem voreingestellten Referenzwert ist. Alternativ hierzu kann es auch sein, dass der Massefluss in Abhängigkeit der ermittelten Geschwindigkeit kontinuierlich oder stufenweise angepasst wird. Hierdurch ist auf einfache Weise verhinderbar, dass eine Spitze eines Mischers während eines Befüllvorgangs in Kontakt mit der ausgegebenen Masse kommt.

Bei einer vorteilhaften Ausführungsform eines Verfahrens nach der Erfindung gibt das Auspressgerät dem Benutzer eine Rückmeldung, wenn eine während eines Befüllvorgangs ermittelte Bewegungsgeschwindigkeit kleiner einem definierten Grenzwert und/oder größer einem vordefinierten Grenzwert ist. Hierdurch wird es dem Benutzer einfach gemacht eine ideale Bewegungsgeschwindigkeit einzuhalten. Dabei kann es vorgesehen sein, dass die jeweiligen Grenzwerte in Abhängigkeit des jeweils ermittelten Füllvolumens bzw. der jeweils vorliegenden Parameter wie Bohrlochtiefe, Bohrlochdurchmesser und Art bzw. Größe des in die Bohrung einzubringenden Elements variieren. Beispielsweise kann hierzu eine Anzeige mit einem Balken vorgesehen sein, der einen idealen Bereich mit einer optimalen Geschwindigkeit aufweist und anzeigt, in welchem Bereich die aktuelle Bewegungsgeschwindigkeit liegt.

Bei einer vorteilhaften Ausführungsform eines Verfahrens nach der Erfindung wird zur Ermittlung der Tiefe der Bohrung ein Referenzdistanzwert mit einem ermittelten Distanzwert bei in Kontakt mit einem Bohrgrund befindlichem Mischer verglichen.

Bei einer vorteilhaften Ausführungsform eines Verfahrens nach der Erfindung ist der Referenzdistanzwert in dem Auspressgerät, insbesondere in der Steuerungseinrichtung des Auspressgeräts, hinterlegt oder wird bei mit der Wandung im Bereich der Bohrung in Kontakt befindlichem Mischer ermittelt. Der hinterlegte Referenzdistanzwert bezieht sich dabei vorzugsweise auf eine Standardlänge eines zum Einsatz kommenden Mischers. Alternativ hierzu kann es vorgesehen sein, insbesondere wenn ein anderer Mischer oder eine Verlängerung für den Standardmischer zum Einsatz kommt, dass benutzerseitig eine Messung des aktuellen Referenzdistanzwert ausgelöst werden kann. Die Messung wird vorzugsweise bei in Kontakt mit der Oberfläche der Wandung im Bereich der Bohrung befindlicher Mischerspitze durchgeführt, wobei der dabei ermittelte Wert als Referenzdistanzwert hinterlegt wird und ausgehend von diesem im Zusammenspiel mit der Messung des aktuellen Distanzwerts eine Tiefe der Bohrung ermittelt wird. Es kann dabei vorgesehen sein, dass der ermittelte Referenzdistanzwert für kommende Vorgänge insbesondere in der Speichereinrichtung hinterlegt wird.

Um eine möglichst genaue Ermittlung insbesondere des Distanzwerts bzw. des Referenzdistanzwerts zu erzielen, kann es vorgesehen sein, dass zur Messung eines Wertes ein Mittelwert aus mehreren Einzelmessungen gebildet wird.

Das im Einzelfall vorliegende Füllvolumen kann besonders genau ermittelt werden, wenn zur Ermittlung des Volumens des in die Bohrung einzubringenden Elements eine Eingabe eines Durchmessers des in die Bohrung einzubringenden Elements verwendet wird. Es kann auch vorgesehen sein, dass der Durchmesser des einzubringenden Elements anhand des gemessenen oder eingegebenen Durchmessers beispielsweise anhand einer in der Steuerungseinrichtung hinterlegten Look-up-Tabelle ermittelt wird.

Eine besonders genaue Ermittlung des aktuell erforderlichen Füllvolumens kann erzielt werden, wenn insbesondere zusätzlich zu der Eingabe und/oder Ermittlung des Durchmessers des in die Bohrung einzubringenden Elements eine Eingabe eines Typs des in die Bohrung einzubringenden Elements verwendet wird. Das Volumen des Elements kann hierdurch besonders exakt ermittelt werden. Beispielsweise können in die Bohrung einzubringende Ankerstangen je nach Bauart bei gleichem Durchmesser unterschiedliche Volumina aufweisen. Dies kann durch die Eingabe des entsprechenden Typs des Elements entsprechend berücksichtigt werden.

Um sicher zu verhindern, dass nach Einbringung der gesamten ermittelten Masse in die Bohrung und Einbringung des Elements in die Bohrung Masse aus der Bohrung austritt kann es vorgesehen sein, dass das ermittelte Füllvolumen der Bohrung automatisiert oder manuell um einen definierten oder wählbaren Wert reduzierbar ist oder reduziert wird. Es kann sich dabei sowohl um eine prozentuale als auch um eine absolute Reduktion des ermittelten Wertes für das Füllvolumens handeln.

Es wird weiterhin ein Auspressgerät zur Durchführung eines derartigen Verfahrens beschrieben, wobei das Auspressgerät in Wirkverbindung mit einer mit einem Mischer ausgeführten Kartusche bringbar ist, und eine Steuerungseinrichtung und eine Distanzmesseinrichtung aufweist.

Mit einem derartigen Auspressgerät bzw. Dispenser ist ein für den jeweiligen Anwendungsfall erforderliches Füllvolumen sehr genau ermittelbar und in eine Bohrung einbringbar. Die Distanzmesseinrichtung kann dabei grundsätzlich an einer beliebigen Position des Auspressgeräts angeordnet sein, wobei beispielsweise die Tiefe der Bohrung durch eine Differenz der ermittelten Werte, insbesondere des Distanzwertes und des Referenzdistanzwertes, ermittelt wird.

Bei einer vorteilhaften Ausführung eines Auspressgeräts nach der Erfindung ist die Distanzmesseinrichtung als Laser-Distanzmesseinrichtung, als Ultraschall-Distanzmesseinrichtung, als Radar-Distanzmesseinrichtung oder als mechanische Distanzmesseinrichtung, mittels der insbesondere eine Abtastung durchführbar ist, ausgeführt.

Eine besonders genaue Ermittlung der Werte ist erzielbar, wenn ein Gravitationssensor vorgesehen ist, mittels welchem eine Neigung des Auspressgeräts ermittelbar ist. Hierbei können die ermittelten Werte je nach vorliegender Neigung soweit erforderlich entsprechend korrigiert werden.

Bei einer vorteilhaften Ausführung eines Auspressgeräts nach der Erfindung ist ein Touchdisplay zur Eingabe von Daten, wie beispielsweise des Referenzdistanzwerts, des Durchmessers der Bohrung, des Durchmessers des Elements, des Typs des Elements oder dergleichen, vorgesehen ist.

Alternativ oder zusätzlich hierzu kann eine mechanische Einstelleinrichtung, beispielsweise in Form eines Einstellrads, vorgesehen sein, mittels der verschiedene Funktionen auswählbar sind. Beispielsweise kann eine Stellung der Einstelleinrichtung zur Messung des Distanzwertes, eine Stellung zur Eingabe eines Referenzdistanzwerts, eine Stellung zur Eingabe eines Durchmessers des Elements und/oder eine Stellung zur Eingabe des Typs des Elements vorgesehen sein.

Weitere Vorteile ergeben sich aus der folgenden Figurenbeschreibung. In den Figuren sind Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Kurzbeschreibung der Zeichnungen

Ausführungsformen werden nachfolgend anhand der beigefügten Zeichnungen näher erläutert. In den Figuren sind gleiche und gleichartige Komponenten mit gleichen Bezugszeichen beziffert.

Es zeigen:
- Fig. 1: eine Ausführungsform eines Verfahrens nach der Erfindung zum Betreiben eines Auspressgeräts;
- Fig. 2: eine vereinfachte Darstellung eines Auspressgeräts in Alleinstellung;
- Fig. 3: eine vereinfachte Darstellung eines in einer Wandung angeordneten Bohrlochs;
- Fig. 4: eine vereinfachte Darstellung des Bohrlochs gemäß Fig. 3, wobei in dem Bohrloch ein beispielsweise als Ankerstange angeordnetes Element mit einer Masse, insbesondere einem Mörtel, angeordnet ist;
- Fig. 5: eine vereinfachte Darstellung des Auspressgeräts gemäß Fig. 2 während der Durchführung eines Verfahrens nach der Erfindung; und
- Fig. 6: eine Darstellung einer Einstelleinrichtung des Auspressgeräts in Alleinstellung.

### Beschreibung einer Ausführungsform

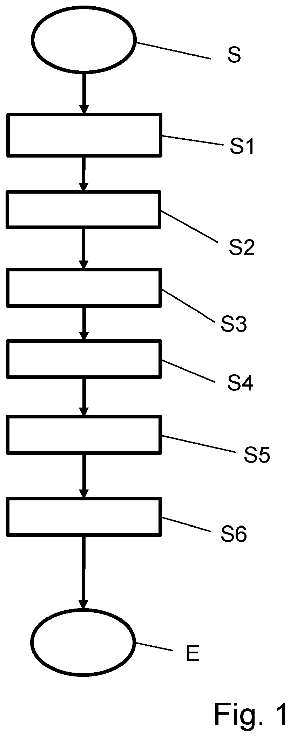

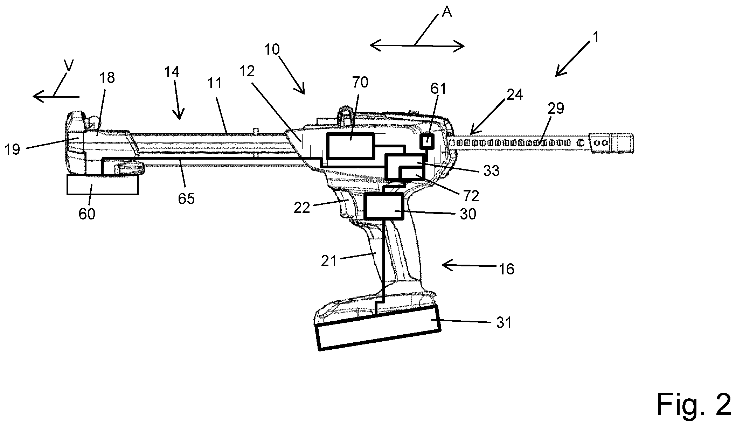

In Fig. 2 ist ein Auspressgerät 10 in Alleinstellung gezeigt, welches zur Durchführung eines in Fig. 1 schematisch gezeigten Verfahrens ausgeführt ist.

Das Auspressgerät 10 kann grundsätzlich zum Auspressen von einkomponentigen und vorliegend insbesondere mehrkomponentigen Massen ausgeführt sein, wobei die Massen beispielsweise zum Verfüllen, Kleben oder Abdichten oder dergleichen Anwendungen im Bau-bereich vorgesehen sein können. Die Massen sind in Kartuschen angeordnet, die in Wirkverbindung mit dem Auspressgerät 10 bringbar sind.

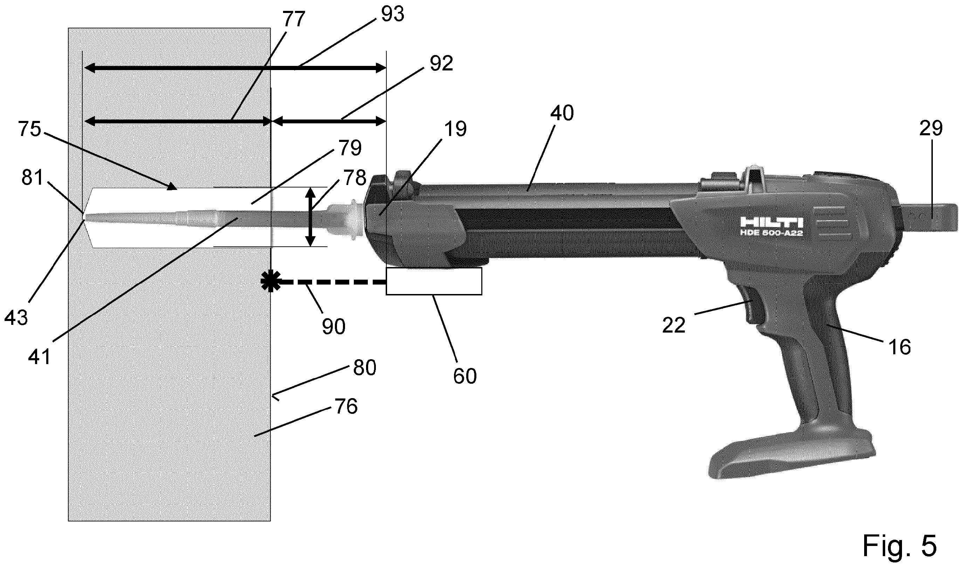

Vorliegend ist das Auspressgerät 10 zum Zusammenwirken mit einer in Fig. 5 teilweise ersichtliche Kartusche 40 ausgeführt, wobei die Kartuscheneinrichtung 40 insbesondere mit zwei Kammern, beispielsweise Folienbehältern, ausgeführt sind, die über ein Kopfteil miteinander verbunden sind. An dem Kopfteil ist ein Mischer 41 angeordnet, über den die in den Folienbehältern befindlichen Massen während eines Auspressvorgangs nach einem Vermischen miteinander ausgebbar sind.

In den Kammern der Kartusche 40 sind beispielweise Massen einer Zweikomponenten-Mörtelmasse vorgesehen, wobei in einer ersten Kammer der Kartusche 40 beispielsweise eine härtbare Harzkomponente und in der weiteren, davon reaktionsinhibierend getrennt angeordneten Kammer der Kartusche 40 eine Härterkomponente angeordnet ist. Während eines Auspressvorgangs werden die Komponenten beispielsweise im Bereich des Mischers 41 miteinander vermischt, wobei die nach der Vermischung der härtbaren Harzkomponente und der Härterkomponente entstehende Masse beispielsweise als Injektionsmörtel für die chemische Verankerung beispielsweise von Metallelementen wie Ankerstangen in mineralischen Untergründen, wie insbesondere Bauwerken aus Ziegelwerk, Beton oder Naturstein, eingesetzt werden kann.

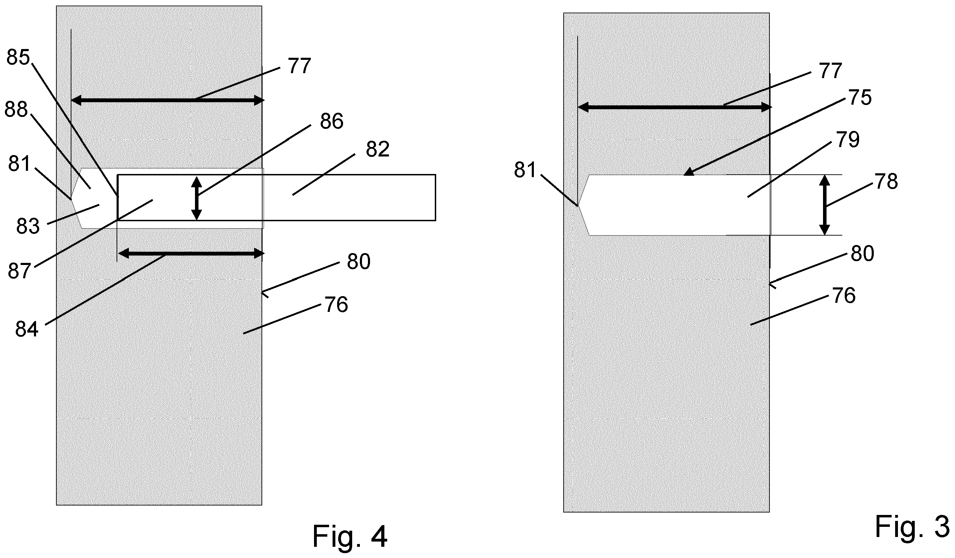

Zunächst wird hierzu eine Bohrung 75 beispielsweise in einem Mauerwerk 76 hergestellt, wie beispielsweise in Fig. 3 ersichtlich. Die Bohrung 75 weist dabei Eine Bohrlochtiefe 77 und einen Durchmesser 78 auf, die ein Innenvolumen 79 der Bohrung 75 definieren. Eine Oberfläche des Mauerwerks 76 im Bereich der Bohrung 75 wird mit 80 bezeichnet.

In Fig. 4 ist vereinfacht gezeigt, wie ein Element 82, insbesondere ein Verankerungsmittel, wie beispielsweise eine Ankerstange, in dem mit Mörtel 83 befüllten Bohrloch 75 angeordnet ist. Die Ankerstange 82 wird nach einer Befüllung Bohrung 75 bzw. dem Bohrloch 75 mit Mörtel 83 in die Bohrung 75 eingeführt und in dieser justiert.

Die Ankerstange 82 ist hier in der gewünschten Endposition mit einer Länge 84 in dem Bohrloch 75 angeordnet, wobei die Länge 84 durch den Abstand zwischen der Oberfläche 80 des Mauerwerks 76 und einer Spitze 85 der Ankerstange 82 definiert ist. Ein Durchmesser der Ankerstange 82 ist dabei mit 86 bezeichnet.

Das Auspressgerät 10 ist zur Ausgabe des Mörtels 83 in die Bohrung 75 ausgeführt. Hierzu weist das Auspressgerät 10 in einem Gehäuse 12 einen Aufnahmeraum 11, in den die Kartusche 40 einlegbar ist. Das Gehäuse 12 des Auspressgeräts 10 erstreckt sich vorliegend im Wesentlichen entlang einer axialen Richtung A und hat einen Funktionsabschnitt 14 und einen Handhabungsabschnitt 16. Der Funktionsabschnitt 14 weist im Wesentlichen den Aufnahmeraum 11 und an einem bearbeitungsseitigen distalen Ende 18 des Funktionsabschnitts 14 einen Bearbeitungskopf 19 auf, in dessen Bereich ein Kopfteil der Kartusche 40 anordenbar ist. Wie in Fig. 5 näher ersichtlich ist, erstreckt sich der Mischer 41 in axialer Richtung A nach vorne über den Bearbeitungskopf 19 bzw. das distale Ende 18 hinaus.

Der Handhabungsabschnitt 16 des Gehäuses 12 weist neben einem Haltegriff 21 einen im Bereich des Haltegriffs 21 angeordneten Betätigungsschalter 22 auf. Zum Auspressen der Kartusche 40 ist eine Auspresseinrichtung 24 vorgesehen, die vorliegend mit zwei Auspresskolben ausgeführt ist, die insbesondere über eine Schubstange 29 fest miteinander verbunden sind. Jeder Auspresskolben weist an seinem der jeweiligen Kammer der Kartusche 40 zugewandten Ende einen Stempel auf.

Es ist weiterhin eine hier nur schematisch gezeigte, insbesondere als Elektromotor 30 ausgeführte Antriebseinrichtung vorgesehen, mittels welcher die Auspresskolben in axialer Richtung A verlagerbar sind.

Um in den Kammern der Kartusche 40 befindliche Massen über den Mischer 41 auszuführen, sind die Auspresskolben über die von dem Elektromotor 30 in einer Vorschubrichtung V antreibbare Schubstange 29 gemeinsam in Richtung des distalen Endes 18 bewegbar.

Der Elektromotor 30 wird vorliegend von einer lediglich in Fig. 2 schematisch gezeigten und als Akkumulator 31 ausgeführten Energieversorgung mit Energie versorgt. Alternativ hierzu kann das Auspressgerät 10 auch netzbetrieben sein, wobei ein mit einem Stromnetz koppelbarer Stecker vorgesehen sein kann. Das Auspressgerät 10 weist weiterhin eine Steuerungseinrichtung 33 auf, welche zur Betätigung des Elektromotors 30 nach einer anwenderseitigen Anforderung mittels des Betätigungsschalters 22 ausgeführt ist.

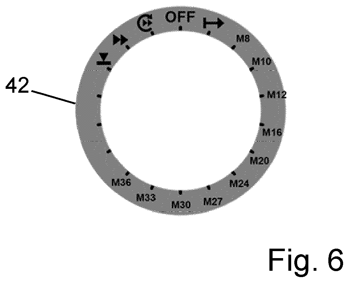

Der Elektromotor 30 kann von der Steuerungseinrichtung 33 in verschiedene Betriebsmodi versetzt werden, die anwenderseitig beispielsweise über einen in Fig. 6 gezeigten Drehschalter 42 wählbar sein können. Alternativ oder zusätzlich zu dem Drehschalter 42 kann beispielsweise auch eine Touch-Screen-Einrichtung 70 vorgesehen sein, mittels der verschiedene Betriebsmodi anwenderseitig wählbar sind und über die dem Anwender oder Benutzer Informationen beispielsweise über den aktuellen Betriebszustand, den aktuellen Ladezustand des Akkumulators 31 oder dergleichen anzeigbar sind.

In Fig. 2 und Fig. 5 ist jeweils schematisch ersichtlich eine Distanzmesseinrichtung 60 gezeigt, welche vorliegend in dem distalen Endbereich 18 des Auspressgeräts 10 angeordnet ist. Bei alternativen Ausführungen kann die Distanzmesseinrichtung 60 auch an anderen Bereichen des Auspressgeräts 10, beispielsweise im Bereich des Handhabungsabschnitts 16 angeordnet sein.

Bei der Distanzmesseinrichtung 60 handelt es sich vorliegend um eine Laser-Distanzmesseinrichtung, wobei die Distanzmesseinrichtung 60 grundsätzlich nach beliebigen Messprinzipien arbeiten kann. Die Distanzmesseinrichtung 60 ist mit der Steuerungseinrichtung 33 gekoppelt.

Mittels der Distanzmesseinrichtung 60 ist, wie in Fig. 5 vereinfacht gezeigt ist, ein Abstand 90 zwischen der Distanzmesseinrichtung 60 und einer Oberfläche, insbesondere der Oberfläche 80 eines Mauerwerks 76 im Bereich der Bohrung 75 messbar.

Es ist weiterhin ein Sensor 61 vorgesehen, der mit der Steuerungseinrichtung 33 gekoppelt ist, wobei der Sensor 61 insbesondere als Gyro-Sensor 61 ausgeführt ist. Mittels des Sensors 61 ist eine Ausrichtung, insbesondere Neigung des Auspressgeräts 10 ermittelbar. Die Steuerungseinrichtung 33 ist dazu ausgeführt, den von der Distanzmesseinrichtung 60 ermittelten Abstandswertes anhand des Neigungswertes während der jeweilen Distanzmessung zu korrigieren.

Das erfindungsgemäße Verfahren dient insbesondere dazu eine möglichst optimale Mörtelmenge in die Bohrung 75 einzubringen, so dass sich nach der Anordnung des Elements, hier der Ankerstange 82, eine ausreichend große Mörtelmenge in der Bohrung 75 befindet, um einen gewünschten Halt der Ankerstange 82 sicherzustellen. Andererseits soll verhindert werden, dass zu viel Mörtelmasse in die Bohrung 75 gefüllt wird, so dass nach der Anordnung der Ankerstange 82 Mörtelmasse aus der Bohrung 75 herausläuft.

Eine Ausführungsform eines erfindungsgemäßen Verfahrens zum Betreiben des Auspressgerätes 10 ist in Fig. 1 gezeigt und wird im Folgenden beschrieben.

Das Verfahren beginnt mit dem Start S. Im Schritt S1 wird die Bohrlochtiefe 77 mittels der Distanzmesseinrichtung 60 ermittelt. Es wird eine Distanzmessung durchgeführt, wenn sich eine Spitze 43 des Mischers 41 in Kontakt mit einem Grund 81 der Bohrung 75 befindet. Diese Messung wird nach nutzerseitiger Aufforderung durchgeführt und ergibt einen aktuellen Distanzwert 93.

Es kann vorgesehen sein, dass in einer Speichereinrichtung 72 der Steuerungseinrichtung 33 ein Referenzdistanzwert 92 hinterlegt ist, der einem Distanzwert bei in Kontakt mit der Oberfläche 80 des Mauerwerks 76 im Bereich der Bohrung 75 entspricht. Es kann vorgesehen sein, dass der Referenzdistanzwert einem Standardmischer zugeordnet ist, der üblicherweise bei für das Auspressgerät 10 verwendeten Kartuschen 40 verwendet wird.

Sollte im aktuellen Anwendungsfall ein anderer Mischer 41 oder ein Aufsatz für den Mischer 40 zum Einsatz kommen, kann der Referenzdistanzwert nach nutzerseitiger Anforderung mittels der Distanzmesseinrichtung 60 gemessen werden. Hierzu wird eine Abstandsmessung nach nutzerseitiger Aufforderung durchgeführt, insbesondere wenn sich die Spitze 43 des Mischers 41 bzw. eines Aufsatzes für einen Mischer in Kontakt mit der Oberfläche 80 des Mauerwerks 76 befindet.

Es kann vorgesehen sein, dass der in der Speichereinrichtung 72 hinterlegte Referenzdistanzwert durch den hierbei gemessenen Referenzdistanzwert überschrieben und für zukünftige Verfahren verwendet wird.

Die Bohrlochtiefe 77 wird von der Steuerungseinrichtung 33 durch eine Differenz des Referenzdistanzwerts 92 von dem Distanzwerts 93 errechnet.

Um möglichst genaue Werte zur Verfügung zu haben, kann es vorgesehen sein, dass die jeweilige Messung zweimal, dreimal oder mehrmals durchgeführt wird und der jeweilige Wert als Mittelwert der Messungen ermittelt wird.

Im darauffolgenden Verfahrensschritt S2 wird ein Durchmesser 78 der Bohrung 75 ermittelt oder eingestellt. Es kann dabei vorgesehen sein, dass die Distanzmesseinrichtung 60 zur Ermittlung des Durchmessers 78 der Bohrung 75 ausgeführt ist. Alternativ kann es auch vorgesehen sein, dass der Durchmesser 78 der Bohrung 75 nutzerseitig einstellbar ist oder ein in der Speichereinrichtung 72 hinterlegter Wert für den Durchmesser 78 verwendet wird.

Im Verfahrensschritt S3 wird von der Steuerungseinrichtung 33 das Innenvolumen 79 der Bohrung 75 aus der Bohrlochtiefe 77 und dem Durchmesser 78 der Bohrung 75 errechnet.

Im Verfahrensschritt S4 wird bei sich in einer Endposition befindlichen, in der Bohrung 75 angeordneten Element, insbesondere der Ankerstange 82, sich innerhalb der Bohrung 75 befindliches Volumen 87 der Ankerstange 82 ermittelt oder eingestellt. Hierzu kann es vorgesehen sein, dass anhand des ermittelten oder eingestellten Durchmessers 78 der Bohrung 75 und einer in der Speichereinrichtung 72 hinterlegten Look-up-Tabelle auf einen verwendeten Durchmesser und eine Einführtiefe bzw. die Länge 84 geschlossen wird. Alternativ hierzu kann es auch vorgesehen sein, dass diese Werte nutzerseitig eingebbar sind. Hierbei kann es auch vorgesehen sein, dass nutzerseitig eine Art bzw. ein Typ des Elements, insbesondere der Ankerstange 82, eingebbar sind, und anhand einer in der Speichereinrichtung 72 hinterlegten Look-up-Tabelle anhand des eingegebenen Typs des Elements 82 in Kombination mit dessen Durchmesser und Länge auf das innerhalb der Bohrung 75 anzuordnende Volumen des Elements 82 geschlossen wird.

Im Verfahrensschritt S5 wird von der Steuerungseinrichtung 33 das im Verfahrensschritt S4 ermittelte oder eingestellte Volumen 87 des Elements 82 von dem Innenvolumen 79 der Bohrung 75 zu einem Füllvolumen 88 subtrahiert.

Das im Verfahrensschritt S5 ermittelte Füllvolumen 88 wird von der Steuerungseinrichtung 33 im Verfahrensschritt S6 zur Ausgabe eines folgenden Auspressvorgangs eingestellt, so dass im folgenden Auspressvorgangs bei einer nutzerseitigen Betätigung des Betätigungsschalters 22 eine dem ermittelten Füllvolumen 88 entsprechende Menge an Mörtel in die Bohrung 75 ausgegeben wird.

Es kann vorgesehen sein, dass von dem ermittelten Füllvolumen 88 ein vordefinierter absoluter oder prozentualer Wert abgezogen wird, um sicher zu verhindern, dass bei befüllter Bohrung 75 in der das Element 82 angeordnet ist, Masse bzw. Mörtel 83 herausläuft.

Es kann vorgesehen sein, dass während des Auspressvorgangs anhand einer kontinuierlichen Abstandsmessung durch die Distanzmesseinrichtung 60 eine Geschwindigkeit ermittelt wird, mittels welcher das Auspressgerät 10 gegenüber der Oberfläche 80 des Mauerwerks 76 und somit die Spitze 43 des Mischers 41 aus der Bohrung 75 bewegt wird. Es kann dabei vorgesehen sein, dass ein ausgegebener Massefluss entsprechend der ermittelten Geschwindigkeit anhand eines in der Speichereinrichtung 72 hinterlegten Algorithmus oder einer hinterlegten Look-up-Tabelle gesteuert bzw. geregelt wird. Hierdurch kann beispielsweise eine Verschmutzung der Mischerspitze bei zu geringer Geschwindigkeit und eine nicht ausreichende Füllung der Bohrung 75 insbesondere im Bereich des Grunds 81 bei zu hoher Geschwindigkeit verhindert werden.

Beispielsweise kann es vorgesehen sein, dass ein ausgegebener Massefluss reduziert bzw. gestoppt wird, wenn eine hinterlegte Grenzgeschwindigkeit unterschritten wird. Darüber hinaus kann es vorgesehen sein, dass dem Nutzer mittels der Anzeigeeinrichtung 70, beispielsweise mittels eines Balkens, eine aktuelle Geschwindigkeit in Relation zu einer optimalen Geschwindigkeit gezeigt wird. Hierbei kann beispielsweise ein grüner, ein gelber und ein roter Bereich vorgesehen sein.

Alternativ oder zusätzlich hierzu kann eine Ausgabeeinrichtung vorgesehen sein, die dem Nutzer eine optische, akustische, haptische oder vergleichbare Rückmeldung gibt, wenn eine ermittelte Geschwindigkeit größer und/oder kleiner als hinterlegte Grenzwerte ist.

## Patentansprüche

1. Verfahren zum Betreiben eines Auspressgeräts (10), welches in Wirkverbindung mit einer mit einem Mischer (41) ausgeführten Kartusche (40) bringbar ist, wobei das Auspressgerät (10) eine Steuerungseinrichtung (33) und eine Distanzmesseinrichtung (60) aufweist, wobei mittels des Auspressgeräts (10) in der Kartusche (40) befindliche Masse (83) in eine in einer Wandung (76) befindliche Bohrung (75) einbringbar ist,
aufweisend die folgenden Schritte:
- Ermittlung einer Tiefe (77) der Bohrung (75) mittels der Distanzmesseinrichtung (60) (S1);
- Ermittlung oder Einstellung eines Durchmessers (78) der Bohrung (75) (S2);
- Berechnung eines Innenvolumens (79) der Bohrung (75) (S3);
- Ermittlung oder Einstellung eines Volumens (87) eines innerhalb der Bohrung (75) anzuordnenden Teils eines Elements (82), insbesondere einer Ankerstange (S4);
- Subtraktion des Volumens (87) von dem berechneten Innenvolumen (79) der Bohrung (75) zu einem Füllvolumen (88) (S5);
- Einstellung des ermittelten Füllvolumens (88) in dem Auspressgeräts (10) zur Ausgabe eines folgenden Auspressvorgangs (S6).

2. Verfahren nach Anspruch 1, **dadurch gekennzeichnet, dass** eine Geschwindigkeit, mit der das Auspressgerät (10) während eines Befüllvorgangs gegenüber der Oberfläche (80) der Wandung (76) bewegt wird, ermittelt wird, wobei ein Befüllvorgang der Bohrung (75) in Abhängigkeit der ermittelten Geschwindigkeit durchgeführt wird.

3. Verfahren nach Anspruch 2, **dadurch gekennzeichnet, dass** ein von dem Auspressgerät (10) ausgegebener Massefluss reduziert oder gestoppt wird, wenn eine ermittelte Geschwindigkeit kleiner oder gleich einem voreingestellten Referenzwert ist.

4. Verfahren nach einem der vorhergehenden Ansprüche, **dadurch gekennzeichnet, dass** das Auspressgerät (10) dem Benutzer eine Rückmeldung gibt, wenn eine während eines Befüllvorgangs ermittelte Bewegungsgeschwindigkeit kleiner einem definierten Grenzwert und/oder größer einem vordefinierten Grenzwert ist.

5. Verfahren nach einem der vorhergehenden Ansprüche, **dadurch gekennzeichnet, dass** zur Ermittlung der Tiefe (77) der Bohrung (75) ein Referenzdistanzwert mit einem ermittelten Distanzwert bei in Kontakt mit einem Bohrgrund (81) befindlichem Mischer (41) verglichen wird.

6. Verfahren nach Anspruch 5, **dadurch gekennzeichnet, dass** der Referenzdistanzwert in dem Auspressgerät (10) hinterlegt ist oder bei mit der Wandung (76) im Bereich der Bohrung (75) in Kontakt befindlichem Mischer (41) ermittelt wird.

7. Verfahren nach einem der vorhergehenden Ansprüche, **dadurch gekennzeichnet, dass** zur Messung eines Wertes durch die Distanzmesseinrichtung (60) ein Mittelwert aus mehreren Einzelmessungen gebildet wird.

8. Verfahren nach einem der vorhergehenden Ansprüche, **dadurch gekennzeichnet, dass** zur Ermittlung des Volumens (87) des innerhalb der Bohrung (75) anzuordnenden Teils des Elements (82) eine Eingabe eines Durchmessers (86) des in die Bohrung (75) einzubringenden Elements (82) verwendet wird.

9. Verfahren nach einem der vorhergehenden Ansprüche, **dadurch gekennzeichnet, dass** zur Ermittlung des Volumens (87) des innerhalb der Bohrung (75) anzuordnenden Teils des Elements (82) eine Eingabe eines Typs des in die Bohrung (75) einzubringenden Elements (82) verwendet wird.

10. Verfahren nach einem der vorhergehenden Ansprüche, **dadurch gekennzeichnet, dass** das ermittelte Füllvolumen (88) der Bohrung (75) automatisiert oder manuell um einen gewünschten Wert reduzierbar ist oder reduziert wird.

11. Auspressgerät zur Durchführung eines Verfahrens nach einem der Ansprüche 1 bis 10, wobei das Auspressgerät (10) in Wirkverbindung mit einer mit einem Mischer (41) ausgeführten Kartusche (40) bringbar ist und eine Steuerungseinrichtung (33) und eine Distanzmesseinrichtung (60) aufweist.

12. Auspressgerät nach Anspruch 11, **dadurch gekennzeichnet, dass** die Distanzmesseinrichtung (60) als Laser-Distanzmesseinrichtung, als Ultraschall-Distanzmesseinrichtung, als Radar-Distanzmesseinrichtung oder als mechanische Distanzmesseinrichtung ausgeführt ist.

13. Auspressgerät nach einem der Ansprüche 11 oder 12, **dadurch gekennzeichnet, dass** ein Sensor (61) vorgesehen ist, mittels welchem eine Neigung des Auspressgeräts (10) ermittelbar ist.

14. Auspressgerät nach einem der Ansprüche 11 bis 13, **dadurch gekennzeichnet, dass** ein Touchdisplay (70) zur Eingabe von Daten vorgesehen ist.
